# EUROPEAN PATENT SPECIFICATION

(11) **EP 2 522 839 B1**
(45) Date of publication and mention of the grant of the patent: **16.03.2016**
(21) Application number: 12167349.5
(22) Date of filing: 09.05.2012
(51) Int. Cl.: F02D 41/00, F01D 17/16, F02B 37/24

(54) **Control device for turbocharger**
Steuervorrichtung für einen Turbolader
Dispositif de commande pour turbocompresseur

(30) Priority: 12.05.2011 JP 2011107362
(43) Date of publication of application: 14.11.2012
(73) Proprietor: TOYOTA JIDOSHA KABUSHIKI KAISHA, Toyota-shi, Aichi-ken, 471-8571 (JP)
(72) Inventor: Noda, Takanobu, Aichi-ken, 471-8571 (JP); Oshima, Takashi, Aichi-ken, 471-8571 (JP)
(74) Representative: D Young & Co LLP

(56) References cited:
- EP-A1- 1 323 907
- JP-A- 2001 132 508
- JP-A- 2004 036 481

## Description

### BACKGROUND OF THE INVENTION

### 1. Field of the Invention

The invention relates to a control device for a turbocharger mounted in a vehicle and, more particularly, to a control device for a variable nozzle vane turbocharger.

### 2. Description of Related Art

An internal combustion engine (hereinafter, referred to also as engine) mounted in a vehicle is equipped with a supercharger that utilizes exhaust gas energy (hereinafter, referred to also as turbocharger). A turbocharger generally includes a turbine wheel that is rotated by exhaust gas flowing through an exhaust passage of the engine, a compressor impeller that forces the air in the intake passage to enter the combustion chamber of the engine, and a linking shaft that links the turbine wheel and the compressor impeller. In a turbocharger having such a structure, the turbine wheel disposed in the exhaust passage rotates due to energy of exhaust gas, and along with the rotation of the turbine wheel, the compressor impeller disposed in the intake passage rotates, so that intake air is supercharged. Thus, the supercharge air is forced into the combustion chamber of each cylinder of the engine.

As a turbocharger mounted in a vehicle, there is known a variable nozzle vane turbocharger designed so as to allow adjustment of supercharge pressure relative to exhaust gas energy.

A variable nozzle vane turbocharger includes, for example, a variable nozzle vane mechanism that is disposed in an exhaust gas flow path of a turbine housing and that has a plurality of nozzle vanes that are able to change the flow path area of the exhaust gas flow path (also called movable vanes), and an actuator (e.g., a motor actuator) that displaces (rotates) the nozzle vanes. By changing the opening degree of the variable nozzle vane mechanism (hereinafter, also termed the VN opening degree) to change the flow path area between mutually adjacent nozzle vanes (throat area), the flow speed of exhaust gas introduced toward the turbine wheel is adjusted (see, for example, Japanese Patent Application Publication No. 2009-299505 (JP 2009-299505 A) and Japanese Patent Application Publication No. 2003-129853 (JP 2003-129853 A)). By performing the adjustment of the flow speed of exhaust gas in this manner, the rotation speed of the turbine wheel and the compressor impeller can be adjusted, so that the pressure of air introduced into the combustion chambers of the engine can be adjusted. Therefore, it becomes possible to improve, for example, the torque response, which is related to acceleration performance, and the degree of flexibility in adaptation for the output, fuel economy (fuel consumption rate) and emission.

In a variable nozzle vane turbocharger as described above, pressure pulsation of exhaust gas passing by the nozzle vanes may resonate (may be amplified) within the exhaust pipe, producing unusual noise. As a countermeasure for this, a control of setting the VN opening degree of a nozzle vane mechanism to an open side (hereinafter, also termed the VN opening control) is performed. By performing the VN opening control, the flow speed of exhaust gas that passes by the nozzle vanes becomes smaller, so that occurrence of unusual noise can be restrained.

In the variable nozzle vane turbocharger, unusual noise occurs during deceleration only when a certain condition is fulfilled. However, in the related-art control, the VN opening control is always performed when the vehicle decelerates. Therefore, even in a condition in which unusual noise does not occur, the VN opening control is executed and the execution of the VN opening control lowers the supercharge pressure, and therefore the engine performance may be deteriorated. If such a situation occurs, there may occur deterioration of combustion, resulting in emission deterioration, increase of smoke, misfiring, deterioration of reacceleration performance after deceleration (sluggishness at the time of reacceleration), etc.

EP 1 323 907 A1 relates to a control device for a variable-geometry turbocharger.

JP 2004 036481 A relates to a supercharger control device for an internal combustion engine.

JP 2001 132508 A relates to a fuel control device for a diesel engine with supercharger.

### SUMMARY OF THE INVENTION

The invention realizes a control that makes it possible to minimize the production of unusual noise at the time of deceleration and the deterioration of combustion and the deterioration of reacceleration performance in a control device for a variable nozzle vane turbocharger.

A first aspect of the invention relates to a control device for a turbocharger that includes a compressor provided in an intake passage of an engine mounted in a vehicle; a turbine wheel provided in an exhaust passage of the engine; and a variable nozzle vane mechanism that includes a plurality of nozzle vanes provided on an outer peripheral side of the turbine wheel and that adjusts a flow of exhaust gas by changing an opening degree of the nozzle vanes. The control device includes nozzle vane opening degree control means for executing a nozzle vane opening control (VN opening control) of controlling the opening degree of the nozzle vanes of the nozzle vane mechanism to an open side in order to prevent occurrence of unusual noise.

The nozzle vane opening degree control means executes the nozzle vane opening control if "a condition that an accelerator is off", "a condition that a clutch device provided between the engine and a drive system is in a disengaged clutch state", "a condition that a flow rate of the gas flowing to the turbocharger is greater than or equal to a predetermined determination threshold value", "a condition that an engine rotation speed is decreasing", "a condition that a vehicle speed is less than or equal to a predetermined determination threshold value", "a condition that an atmospheric pressure is greater than or equal to a predetermined determination threshold value", "a condition that an engine coolant temperature is greater than or equal to a predetermined determination threshold value", "a condition that an intake air temperature is greater than or equal to a predetermined determination threshold value", "a condition that a throttle opening degree is greater than or equal to a predetermined determination threshold value", and "a condition that an amount of fuel injection is less than or equal to a predetermined determination threshold value" are all fulfilled.

According to the foregoing aspect of the invention, instead of always executing the VN opening control at the time of deceleration, the VN opening control is executed only if a condition for occurrence of unusual noise during deceleration is fulfilled (concretely, only if "the condition that the clutch is in the disengaged state", "the condition that the flow rate of the gas flowing to the turbocharger is greater than or equal to the predetermined determination threshold value" and "the condition that the engine rotation speed is decreasing" are all fulfilled). Due to this control, the frequency of execution of the VN opening control can be minimized, and therefore the problems resulting from the VN opening control, that is, the deterioration of combustion and the deterioration of reacceleration performance, can also be minimized.

Besides, even in the case where the condition for occurrence of unusual noise has been fulfilled, the VN opening control is not executed if there is a possibility that the deterioration of the combustion state of the engine, and the like, may be caused by executing the VN opening control (concretely, if any one of "the condition that the atmospheric pressure is higher than or equal to the predetermined determination threshold value", "the condition that the engine coolant temperature is higher than or equal to the predetermined determination threshold value", "the condition that the intake air temperature is higher than or equal to the predetermined determination threshold value", "the condition that the throttle opening degree is greater than or equal to the predetermined determination threshold value" and "the condition that the amount of fuel injection is less than or equal to the predetermined determination threshold value" is unfulfilled). Therefore, the emission deterioration, the increased smoke and the occurrence of misfire can be more effectively restrained.

In the foregoing aspect of the invention, taking into account that when the vehicle speed is fast, background noise may be so great that unusual noise, if any occurs, is not disturbing, the condition that "the vehicle speed is less than or equal to the predetermined determination threshold value" is included in the foregoing conditions for executing the VN opening control.

A second aspect of the invention relates to a control method for a turbocharger that includes a compressor provided in an intake passage of an engine mounted in a vehicle; a turbine wheel provided in an exhaust passage of the engine; and a variable nozzle vane mechanism that includes a plurality of nozzle vanes provided on an outer peripheral side of the turbine wheel and that adjusts a flow of exhaust gas by changing an opening degree of the nozzle vanes. The control method includes the steps of determining whether a first condition that an accelerator is off, a second condition that a clutch device provided between the engine and a drive system is in a disengaged clutch state, a third condition that a flow rate of the gas flowing to the turbocharger is greater than or equal to a predetermined determination threshold value, a fourth condition that an engine rotation speed is decreasing, a fifth condition that a vehicle speed is less than or equal to a predetermined determination threshold value, a sixth condition that an atmospheric pressure is greater than or equal to a predetermined determination threshold value, a seventh condition that an engine coolant temperature is greater than or equal to a predetermined determination threshold value, an eighth condition that an intake air temperature is greater than or equal to a predetermined determination threshold value, a ninth condition that a throttle opening degree is greater than or equal to a predetermined determination threshold value, and a tenth condition that an amount of fuel injection is less than or equal to a predetermined determination threshold value are all fulfilled; and executing a nozzle vane opening control that controls the opening degree of the nozzle vanes of the nozzle vane mechanism to an open side in order to prevent occurrence of unusual noise if it is determined that all of the first condition to the tenth condition are fulfilled.

According to these aspects of the invention, in a turbocharger that includes a variable nozzle vane mechanism, the nozzle vane opening control is executed only if the condition for executing the nozzle vane opening control is fulfilled during deceleration. Therefore, the occurrence of unusual noise during deceleration and the deterioration of combustion and of reacceleration performance can be minimized.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic construction diagram showing an example of a power train of a vehicle including a turbocharger to which the invention is applied;
FIG. 2 is a longitudinal sectional view showing an example of a turbocharger that is attached to an engine;
FIG. 3 is a view of a variable nozzle vane mechanism taken from the outside of the turbocharger, showing a state in which the opening degree of nozzle vanes is set at an open side.
FIG. 4 is a view of the variable nozzle vane mechanism taken from the inside of the turbocharger, showing a state in which the opening degree of the nozzle vanes is set at the open side;
FIG. 5 is a view of the variable nozzle vane mechanism taken from the outside of the turbocharger, showing a state in which the opening degree of the nozzle vanes is set at a closed side;
FIG. 6 is a view of the variable nozzle vane mechanism taken from the inside of the turbocharger, showing a state in which the opening degree of the nozzle vanes is set at the closed side;
FIG. 7 is a block diagram showing a construction of a control system that includes an ECU;
FIG. 8 is a diagram schematically showing flows of exhaust gas that pass by the nozzle vanes;
FIG. 9 is a flowchart showing an example of a VN opening control that the ECU executes;
FIG. 10 is a timing chart showing an example of the processing content of step ST102 in the flowchart shown in FIG. 9;
FIG. 11 is a timing chart showing an example of the processing content of step ST103 in the flowchart shown in FIG. 9;
FIG. 12 is a timing chart showing an example of the processing content of step ST104 in the flowchart shown in FIG. 9;
FIG 13 is a timing chart showing an example of the processing content of step ST105 in the flowchart shown in FIG. 9;
FIG. 14 is a timing chart showing an example of the processing content of step ST106 in the flowchart shown in FIG. 9;
FIG. 15 is a timing chart showing an example of the processing content of step ST107 in the flowchart shown in FIG. 9;
FIG. 16 is a timing chart showing an example of the processing content of step ST108 in the flowchart shown in FIG 9;
FIG. 17 is a timing chart showing an example of the processing content of step ST109 in the flowchart shown in FIG. 9;
FIG 18 is a timing chart showing an example of the processing content of step ST110 in the flowchart shown in FIG. 9; and
FIG. 19 is a timing chart showing changes in the supercharge pressure of the turbocharger in the case where a VN opening control is not executed at the time of deceleration and the case where the VN opening control is executed at the time of deceleration.

### DETAILED DESCRIPTION OF EMBODIMENTS

Hereinafter, embodiments of the invention will be described.

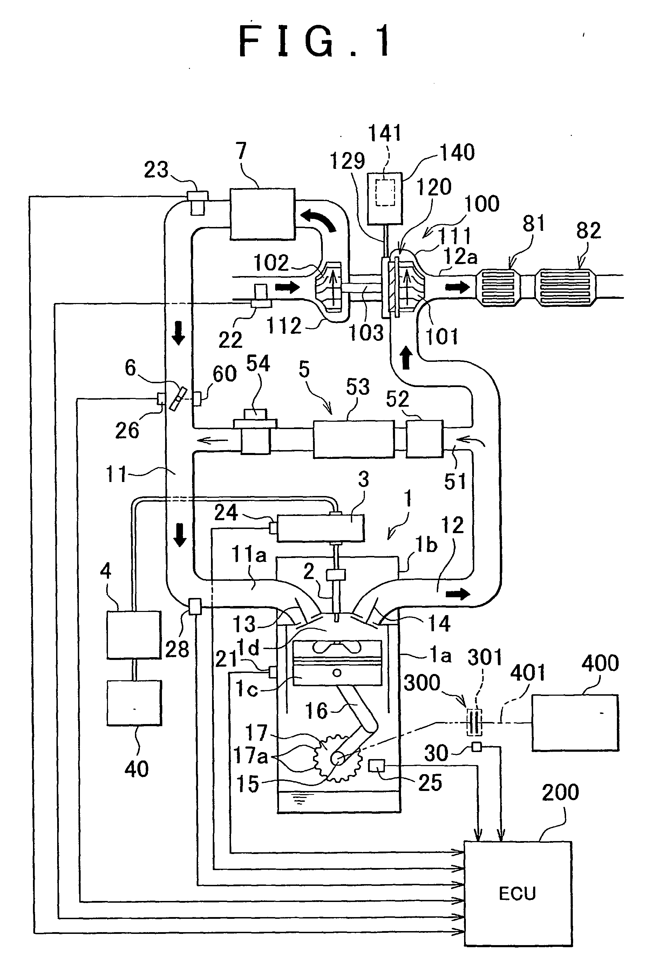

FIG. 1 is a diagram showing a schematic construction of a power train of a vehicle including a turbocharger to which the invention is applied.

The power train shown in FIG. 1 includes an engine 1, a clutch device 300, a manual transmission 400, etc. The rotating drive force (torque) generated by the engine 1 is input to the manual transmission 400 via the clutch device 300, and the rotation speed is changed at an appropriate speed ratio (the speed ratio of the shift speed selected by a driver operating a shift lever) by the manual transmission 400, and then the rotating drive force is transferred to driving wheels via a differential gear, a drive shaft, etc. The manual transmission 400 is, for example, a synchronous mesh manual transmission having six forward speeds and one reverse speed.

The clutch device 300 includes a clutch mechanism portion 301, a clutch pedal, a clutch master cylinder, a clutch release cylinder, etc. The clutch mechanism portion 301 is disposed between a crankshaft 15 of the engine 1 and an input shaft 401 of the manual transmission 400, and transfers drive force from the crankshaft 15 to the input shaft 401 and cuts off the transfer of drive force, and changes the state of transfer of drive force. In this example, the clutch mechanism portion 301 is constructed as a dry single-plate friction clutch. The clutch mechanism portion 301 may have a construction other than the above-described construction.

A clutch sensor 30 is provided for the clutch device 300. The clutch sensor 30 outputs a clutch-off signal (clutch disengagement signal) when the driver depresses the clutch pedal so that the clutch mechanism portion 301 is brought to a disconnected state (i.e., a disengaged clutch state). The output signal of the clutch sensor 30 is input to an electronic control unit (ECU) 200, which will be described later. A clutch stroke sensor may be used as means for detecting the disengaged clutch state.

(ENGINE) Next, a schematic construction of the engine (internal combustion engine) will be described with reference to FIG. 1. FIG. 1 shows a construction of one cylinder of the engine 1.

The engine 1 in this embodiment is an in-cylinder direct injection four-cylinder diesel engine. Inside a cylinder block 1a that forms each cylinder, a piston 1c that reciprocates in the vertical direction is provided. Each piston 1c is linked to the crankshaft 15 via a connecting rod 16, so that the reciprocating motion of the pistons 1c is converted into rotation of the crankshaft 15 by the connecting rods 16. The crankshaft 15 of the engine 1 is linked to the manual transmission 400 via the clutch device 300 as described above.

A signal rotor 17 is attached to the crankshaft 15. A plurality of protrusions (teeth) 17a are provided equiangularly on an outer peripheral surface of the signal rotor 17. An engine rotation speed sensor (crank position sensor) 25 is disposed on the side of, and in the vicinity of the signal rotor 17. The engine rotation speed sensor 35 is, for example, an electromagnetic pickup, and generates a pulsed signal (output pulse) corresponding to the protrusion 17a of the signal rotor 17 when the crankshaft 15 rotates.

The cylinder block 1a of the engine 1 is provided with a coolant temperature sensor 21 that detects the temperature of engine coolant. Besides, a cylinder head 1b is provided on an upper end of the cylinder block 1a. A combustion chamber 1d is formed between the cylinder head 1b and the piston 1c of each cylinder.

Injectors 2 for injecting fuel directly into the combustion chambers 1d of the engine 1 are provided in the cylinder head 1b of the engine 1. The injectors 2 are connected to a common rail (pressure accumulation chamber) 3. While the injector 2 is in an open valve state, fuel from the common rail 3 is injected from the injector 2 into a corresponding one of the combustion chambers 1d.

The common rail 3 is provided with a rail pressure sensor 24 for detecting the pressure of high-pressure fuel in the common rail 3 (rail pressure). The common rail 3 is connected to a supply pump 4 that is a fuel pump.

The supply pump 4 is driven by the turning force of the crankshaft 15 of the engine 1. By driving the supply pump 4, fuel is supplied from a fuel tank 40 to the common rail 3. Thus, by opening each injector 2 at predetermined timing, fuel is injected into the combustion chamber 1d of each cylinder of the engine 1. The injected fuel is burned in the combustion chambers Id, and exhaust gas is discharged. The valve opening timing (injection period) of each injector 2 is controlled by the ECU 200 that is described later.

An intake passage 11 and an exhaust passage 12 are connected to the combustion chambers 1d of the engine 1. Intake valves 13 are provided between the intake passage 11 and the combustion chambers 1d. By opening and closing the intake valves 13, communication between the intake passage 1 and the combustion chambers 1d is provided or interrupted.

Exhaust valves 14 are provided between the exhaust passage 12 and the combustion chambers 1d. By opening and closing the exhaust valves 14, communication between the exhaust passage 12 and the combustion chambers 1d is provided or interrupted. The intake valves 13 and the exhaust valves 14 are opened and closed by rotating an intake camshaft and an exhaust camshaft to which rotation of the crankshaft 15 is transferred.

The intake passage 11 is provided with an air cleaner (not shown), an air flow meter 22 that detects the intake air amount (fresh air amount), a compressor impeller 102 of a turbocharger 100 described later, an intercooler 7 for forcibly cooling the intake air whose temperature has risen due to the supercharging of the turbocharger 100, an intake air temperature sensor 23, a throttle valve 6, an intake manifold pressure sensor (supercharge pressure sensor) 28 that detects the pressure in the intake manifold 11a (supercharge pressure), etc.

The throttle valve 6 is disposed in the intake passage 11 at a position downstream (at a downstream side) of the intercooler 7 (the compressor impeller 102 of the turbocharger 100) in an intake air flow. The throttle valve 6 is an electronic controlled valve, and its opening degree is adjusted by a throttle motor 60. The opening degree of the throttle valve 6 (throttle opening degree) is detected by a throttle opening degree sensor 26.

The exhaust passage 12 is provided with a pre-stage S/C catalyst (start catalyst) 81 and a post-stage U/F catalyst (underfloor catalyst) 82. The S/C catalyst 81 is composed of, for example, a three-way catalyst capable of removing hydrocarbon (HC), carbon monoxide (CO), nitrogen oxides (NOx), etc. The U/F catalyst 82 is composed of, for example, a NOx catalyst (e.g., an NOx storage reduction (NSR) catalyst) that has functions of storing NOx from exhaust gas and reducing the stored NOx.

(TURBOCHARGER) The engine 1 is equipped with a turbocharger (supercharger) 100 that supercharges intake air by utilizing exhaust gas pressure.

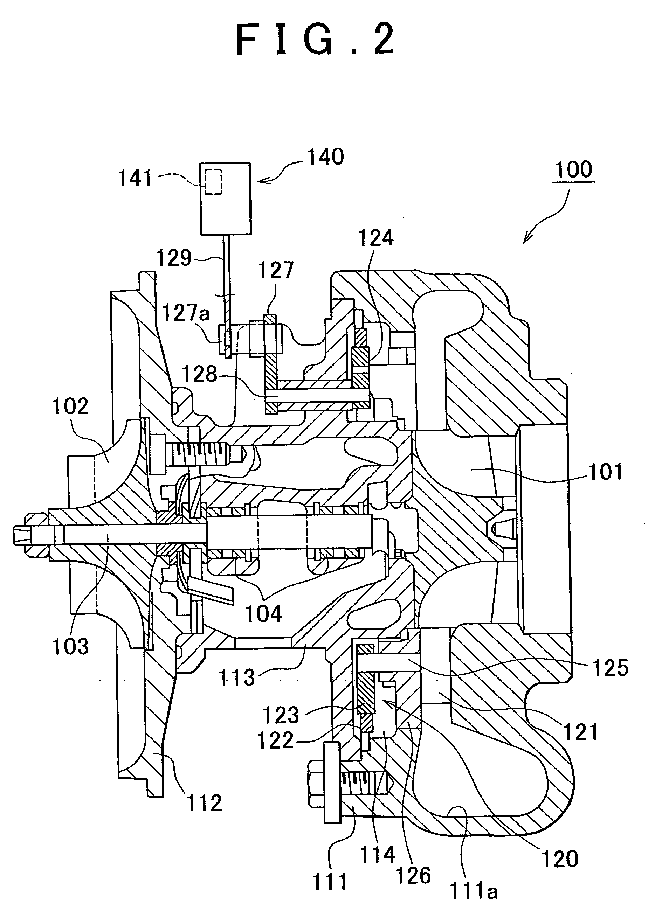

As shown in FIGS. 1 and 2, the turbocharger 100 includes a turbine wheel 101 disposed in the exhaust passage 12, the compressor impeller 102 disposed in the intake passage 11, a linking shaft 103 that integrally links the turbine wheel 101 and the compressor impeller 102 together, etc. As the turbine wheel 101 disposed in the exhaust passage 12 is rotated by energy of exhaust gas, the compressor impeller 102 disposed in the intake passage 11 rotates. Due to rotation of the compressor impeller 102, intake air is supercharged, and supercharged air is forced into the combustion chamber 1d of each cylinder of the engine 1.

The turbine wheel 101 is housed in a turbine housing 111, and the compressor impeller 102 is housed in a compressor housing 112. Besides, floating bearings 104 that support the linking shaft 103 are housed in a center housing 113. The turbine housing 111 and the compressor housing 112 are attached to two opposite sides of the center housing 113.

The turbocharger 100 in this embodiment is a variable nozzle turbocharger (VNT) in which a variable nozzle vane mechanism 120 is provided at a turbine wheel 101 side. By adjusting the opening degree of the variable nozzle vane mechanism 120 (hereinafter, also termed the VN opening degree), the supercharge pressure of the engine 1 can be adjusted. Details of the variable nozzle vane mechanism 120 will be described later.

(EGR DEVICE) The engine 1 is also equipped with an EGR device 5. The EGR device 5 reduces the amount of produced NOx by introducing a portion of exhaust gas into intake air and therefore lowering the combustion temperature in the combustion chamber 1d.

As shown in FIG. 1, the EGR device 5 includes an EGR passage 51 that provides communication between a portion of the exhaust passage 12 upstream (at the upstream side) of the turbine wheel 101 of the turbocharger 100 in an exhaust gas flow and a portion of the intake passage 11 downstream (at the downstream side) of the intercooler 7 (the compressor impeller 102 of the turbocharger 100) in the intake air flow, an EGR catalyst (e.g., an oxidation catalyst) 52, an EGR cooler 53 and an EGR valve 54 that are provided in the EGR passage 51, etc. In the EGR device 5 constructed in this manner, by adjusting the opening degree of the EGR valve 54, the EGR rate [EGR amount/(EGR amount + intake air amount (fresh air amount)) (%)] can be changed, so that the EGR amount (exhaust gas reflux amount), that is, the amount of exhaust gas introduced into the intake passage 11 from the exhaust passage 12 can be adjusted.

The EGR device 5 may be provided with an EGR bypass passage that bypasses the EGR cooler 53, and an EGR bypass switch valve.

(VARIABLE NOZZLE VANE MECHANISM) Next, the variable nozzle vane mechanism 120 of the turbocharger 100 will be described with reference to FIGS. 2 to 6.

The variable nozzle vane mechanism 120 in this embodiment is disposed in a link chamber 114 that is formed between the turbine housing 111 and the center housing 113 of the turbocharger 100.

The variable nozzle vane mechanism 120 includes: a plurality of (e.g., twelve) nozzle vanes 121; an annular unison ring 122; a plurality of open-close arms 123 which are positioned on a radially inner side of the unison ring 122 and whose portions engage with the unison ring 122; a driving arm 124 for driving the open-close arms 123; vane shafts 125 that are each linked to a corresponding one of the open-close arms 123 and that are provided for driving the nozzle vanes 121; and a nozzle plate 126 that retains the vane shafts 125.

The nozzle vanes 121 are disposed equidistantly on an outer peripheral side of the turbine wheel 101 (on a radially outer side of the turbine wheel 101). Each nozzle vane 121 is disposed on the nozzle plate 126, and is capable of being pivoted by a predetermined angle about the vane shaft 125.

The driving arm 124 is pivotable about the driving shaft 128.. The driving shaft 128 is attached integrally to an end portion of a driving link 127. Thus, as the driving link 127 is pivoted, the driving shaft 128 turns, pivoting (swinging) the driving arm 124.

A radially outer-side end portion of each open-close arm 123 is fitted to an inner peripheral surface of the unison ring 122. As the unison ring 122 is turned, the turning force is transferred to the open-close arms 123. Concretely, the unison ring 122 is disposed to be slidable in the circumferential direction relative to the nozzle plate 126. The radially outer-side end portions of the open-close arms 123 and of the driving arm 124 are fitted to a plurality of recess portions 122a formed in an inner peripheral edge portion of the unison ring 122. Thus, the turning force of the unison ring 122 is transferred to the open-close arms 123.

Each open-close arm 123 is pivotable about the vane shaft 125. Each vane shaft 125 is freely rotatably supported by the nozzle plate 126. Each vane shaft 125 links a corresponding one of the open-close arms 123 and a corresponding one of the nozzle vanes 121 integrally together.

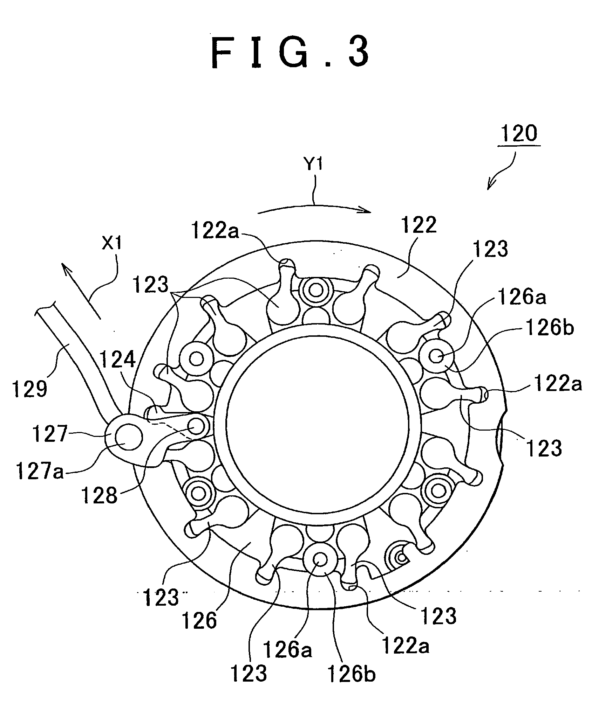

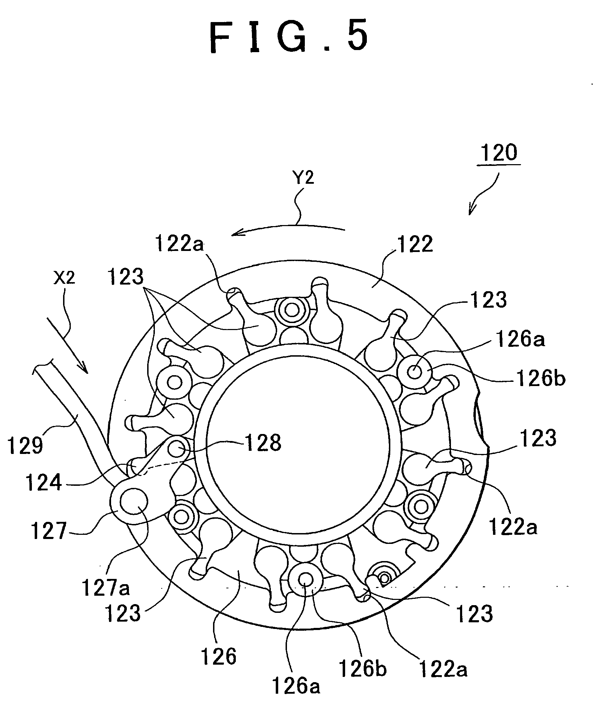

The nozzle plate 126 is fixed to the turbine housing 111. Pins 126a (see FIGS. 3 and 5) are inserted into the nozzle plate 126, and a roller 126b is fitted to each pin 126a. The rollers 126b guide an inner peripheral surface of the unison ring 122. Thus, the unison ring 122 is capable of being rotated in a predetermined direction while held by the rollers 126b.

In the structure as described above, when the driving link 127 is pivoted, the pivoting force thereof is transferred to the unison ring 122 via the driving shaft 128 and the driving arm 124. As the unison ring 122 turns, each open-close arm 12 pivots (swings) and each nozzle vane 121 pivots.

In the variable nozzle vane mechanism 120 in this embodiment, a link rod 129 is freely pivotably linked to another end portion of the driving link 127 via a linking pin 127a. The link rod 129 is linked to a VN actuator 140. The VN actuator 140 includes an electric motor (DC motor) 141, and a conversion mechanism that converts rotation of the electric motor 141 into linear motion and transfers the motion to the link rod 129 (e.g., a gear mechanism that has a worm gear and a worm wheel that meshes with the worm gear, etc. (not shown)). The VN actuator 140 is driven and controlled by the ECU 200. For example, the ECU 200 controls the supply of electric power to the electric motor 141 according to the required value of nozzle vane opening degree that is required based on the operation state of the engine. The electric motor 141 is supplied with electric power from a vehicle-mounted battery (not shown).

As the VN actuator 140 moves the link rod 129 (forward and backward), the driving link 127 is pivoted, pivoting (displacing) each nozzle vane 121.

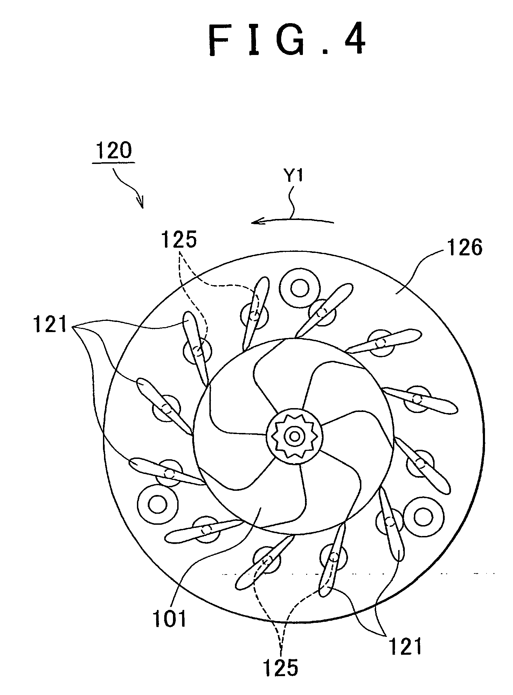

Concretely, as shown in FIG. 3, pulling the link rod 129 in the direction of an arrow XI in FIG. 3 (withdrawal of the link rod 129) turns the unison ring 122 in the direction of an arrow Y1 in FIG. 3. At this time, as shown in FIG 4, each nozzle vane 121 pivots about the vane shaft 125 in the counterclockwise direction in FIG. 4 (the direction of an arrow Y1), so that the nozzle vane opening degree (VN opening degree) is set large.

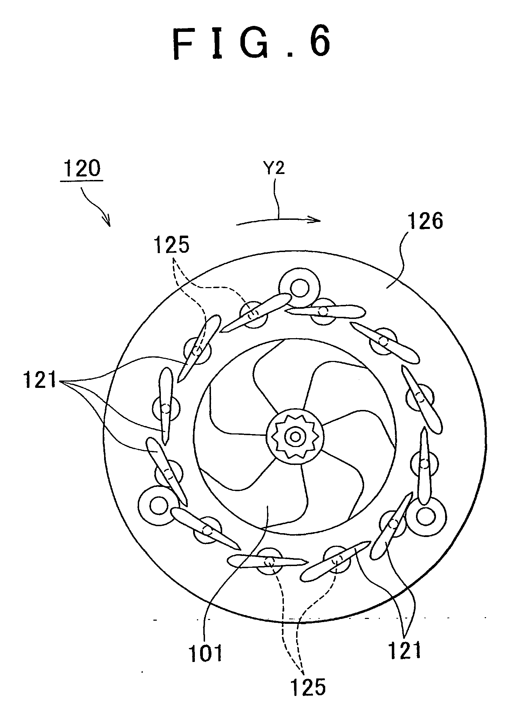

On the other hand, as shown in FIG. 5, pushing the link rod 129 in the direction of an arrow X2 in FIG. 5 (forward movement of the link rod 129) turns the unison ring 122 in the direction of an arrow Y2 in FIG. 5. At this time, as shown in FIG. 6, each nozzle vane 121 pivots about the vane shaft 125 in the clockwise direction in FIG. 6 (the direction of an arrow Y2), so that the nozzle vane opening degree (VN opening degree) is set small.

In the turbocharger 100 having the above-described structure, a turbine housing vortex chamber 111a is provided in the turbine housing 111 that houses the turbine wheel 101. Exhaust gas is supplied into the turbine housing vortex chamber 111a, and the flow of exhaust gas directed by the vortex chamber 111a turns the turbine wheel 101. At this time, as described above, by adjusting the pivotal position of each nozzle vane 121 and thereby setting the pivotal angle thereof, the rate of flow and the speed of flow from the turbine housing vortex chamber 111a to the turbine wheel 101 can be adjusted. This makes it possible to adjust the supercharging performance. For example, if the pivotal position (displacement) of each nozzle vane 121 is adjusted so as to decrease the flow path area (throat area) between mutually adjacent nozzle vanes 1 at the time of low rotation speed of the engine 1, the flow speed of exhaust gas increases, so that high supercharge pressure can be obtained even in a low engine speed range.

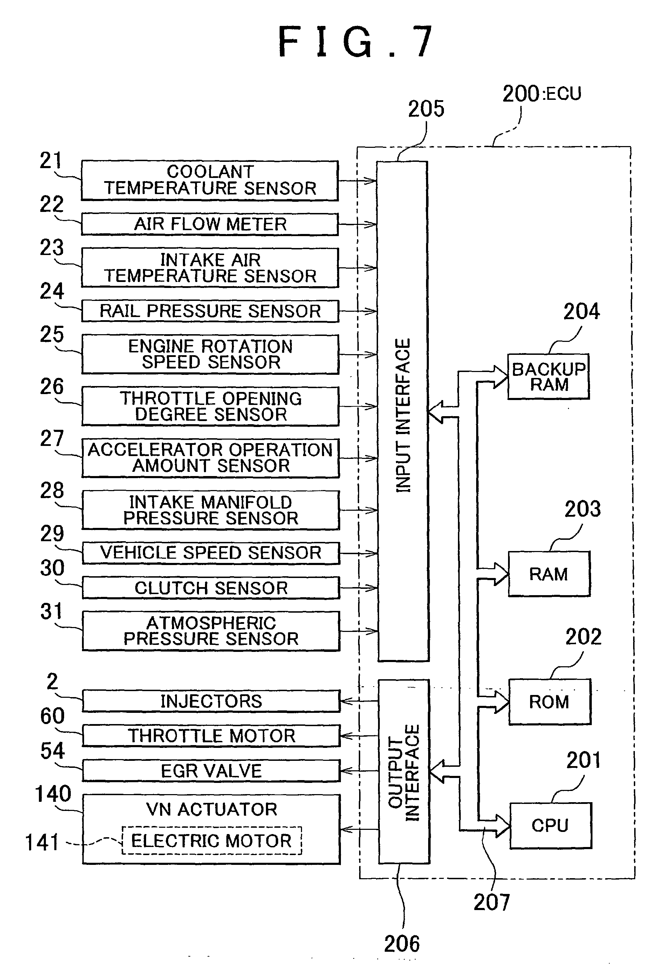

(ECU) The ECU 200 includes a CPU 201, a ROM 202, a RAM 203, a backup RAM 204, etc, as shown in FIG. 7.

The ROM 202 stores various control programs, maps that are referred to when the various control programs are executed, etc. The CPU 201 executes various computation processes on the basis of the various control programs and the maps that are stored in the ROM 202. The RAM 203 is a memory that temporarily stores, for example, computation results provided by the CPU 201 and data input from various sensors. The backup RAM 204 is, for example, a non-volatile memory that stores data and the like that need to be retained when the engine 1 stops.

The CPU 201, the ROM 202, the RAM 203 and the backup RAM 204 are interconnected by a bus 207, and are also connected to an input interface 205 and an output interface 206.

The input interface 205 is connected to the coolant temperature sensor 21, the air flow meter 22, the intake air temperature sensor 23, the rail pressure sensor 24, the engine rotation speed sensor 25, the throttle opening degree sensor 26 that detects the opening degree of the throttle valve 6, an accelerator operation amount sensor 27 that detects the amount of depression of an accelerator pedal (accelerator operation amount), the intake manifold pressure sensor (supercharge pressure sensor) 28, a vehicle speed sensor 29, the clutch sensor 30, and an atmospheric pressure sensor 31 that detects the atmospheric pressure.

The output interface 206 is connected to the injectors 2, the throttle motor 60 of the throttle valve 6, the EGR valve 54, the VN actuator 140 (electric motor 141) that adjusts the opening degree of the variable nozzle vane mechanism 120 of the turbocharger 100, etc.

On the basis of output signals of the various sensors, the ECU 200 executes various controls of the engine 1, including an opening degree control of the throttle valve 6 of the engine 1, a fuel injection amount/timing control (an open-close control of the injectors 2), the EGR control, etc. Furthermore, the ECU 200 executes a "VN opening degree control" described below.

The control device for the turbocharger according to the invention is implemented by programs executed by the ECU 200.

(VN OPENING DEGREE CONTROL) Firstly, the flow speed of exhaust gas passing between the nozzle vanes 121 (VN-passing flow speed) will be described.

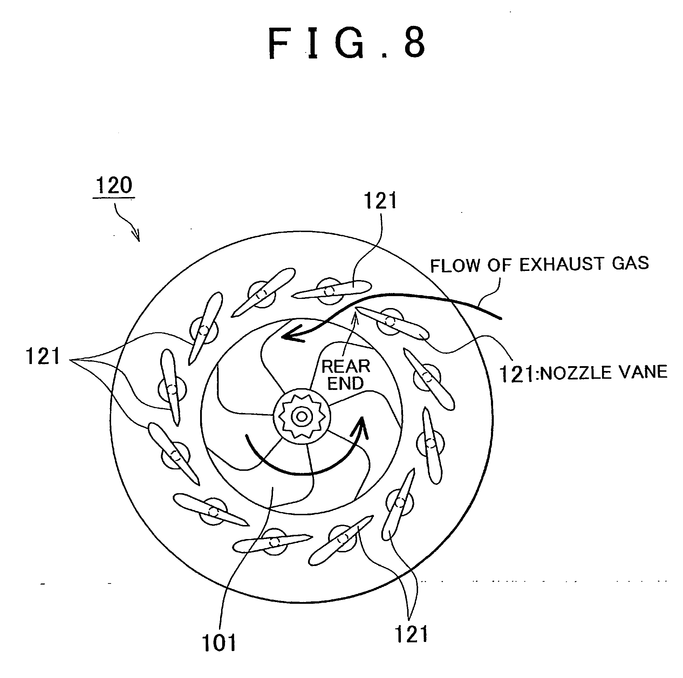

In the case where the variable nozzle vane mechanism 120 is provided in the turbocharger 100, exhaust gas passes between the nozzle vanes 121, and flows toward the turbine wheel 101 as shown in FIG. 8. During deceleration, the variable nozzle vane mechanism 120 is closed (in other words, the VN opening degree is set to a minimum opening degree), so that the flow rate of exhaust gas that passes between the nozzle vanes 121 becomes large (the flow speed of exhaust gas that passes between the nozzle vanes 121 becomes large). When the flow speed of exhaust gas that passes between the nozzle vanes 121 is large, turbulence of exhaust gas occurs downstream of the nozzle vanes 121.

A representative one of the exhaust gas turbulences is the Rankine vortex. It is known that the Rankine vortex occurs at a rear end of a nozzle vane, and results in pressure pulsation that has a frequency component proportional to the flow speed of exhaust gas. That is, since the vortex frequency f of the Rankine vortex satisfies the relation of a theoretical equation [f=St*U/D where St is the Strouhal number (constant number), U is the flow speed, and D is the wake width], the pressure pulsation resulting from the Rankine vortex has a frequency component proportional to the flow speed of exhaust gas that passes between the nozzle vanes 121 (the flow speed at the rear ends of the nozzle vanes). If such a frequency of the pressure pulsation is amplified by space resonance in a space in the exhaust pipe 12a (that includes the space in the turbine housing 111), unusual noise is produced. Thus, in the variable nozzle vane turbocharger 100, unusual noise may occur during deceleration, as a result of the pressure pulsation.

As a countermeasure, during deceleration (when the accelerator is off), a control of setting the VN opening degree of the variable nozzle vane mechanism 120 to the open side for a given time (VN opening control) is performed as described above. By performing the VN opening control in this manner, the flow speed of exhaust gas passing between the nozzle vanes 121 decreases, so that the production of unusual noise can be restrained.

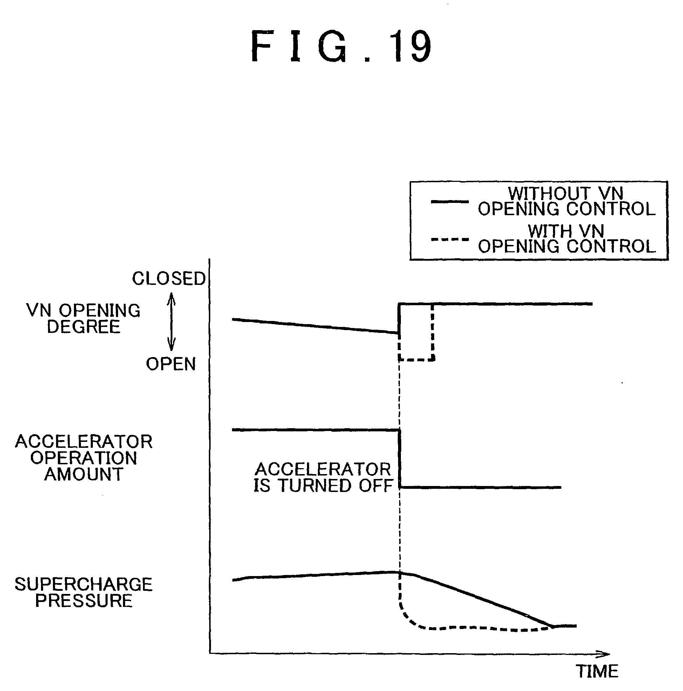

However, if the VN opening control is always executed at the time of deceleration, there may occur deterioration of combustion, deterioration of reacceleration performance (sluggishness at the time of reacceleration from a decelerated state), etc. This will be described with reference to FIG. 19.

As shown in FIG. 19, in this kind of VN opening degree control, during deceleration (when the accelerator is off), in order to secure good reacceleration performance from the decelerated state, the variable nozzle vane mechanism 120 is closed (in other words, VN opening degree is set to the closed side) so that the supercharge pressure of the turbocharger does not sharply drop (see a solid line in FIG. 19). However, if the VN opening control is executed at the time of deceleration in order to restrain unusual noise as shown by an interrupted line in FIG. 19, the supercharge pressure of the turbocharger may sharply decrease, and the engine performance may deteriorate. In such a situation, there may occur emission deterioration, increased smoke and misfire resulting from deterioration of combustion, as well as deterioration of the reacceleration performance after declaration, etc.

Thus, there are contradicting issues. That is, there is a need to perform the VN opening control in order to restrain the production of unusual noise during deceleration, but that executing the VN opening control during deceleration may cause deterioration of combustion and deterioration of reacceleration performance.

It is to be noted herein that the variable nozzle vane turbocharger 100 produces unusual noise during deceleration only when a certain specific condition is fulfilled. Despite of this, the VN opening control is always performed at the time of deceleration according to the related-art controls. Therefore, in the related-art, even in a condition where unusual noise does not occur, the VN opening control may be executed, and the execution of the VN opening control may lower the supercharge pressure, and therefore, may result in deterioration of the engine performance. In such a case, there may occur emission deterioration, increased smoke, and misfire resulting from the deterioration of combustion as well as deterioration of the reacceleration performance from the decelerated state.

Taking the foregoing point into account, this embodiment has a technical feature that the contradicting problems are minimized, that is, the production of unusual noise during deceleration and the deterioration of combustion and of reacceleration performance are minimized by allowing the VN opening control to be executed only when a condition for occurrence of unusual noise is fulfilled during deceleration.

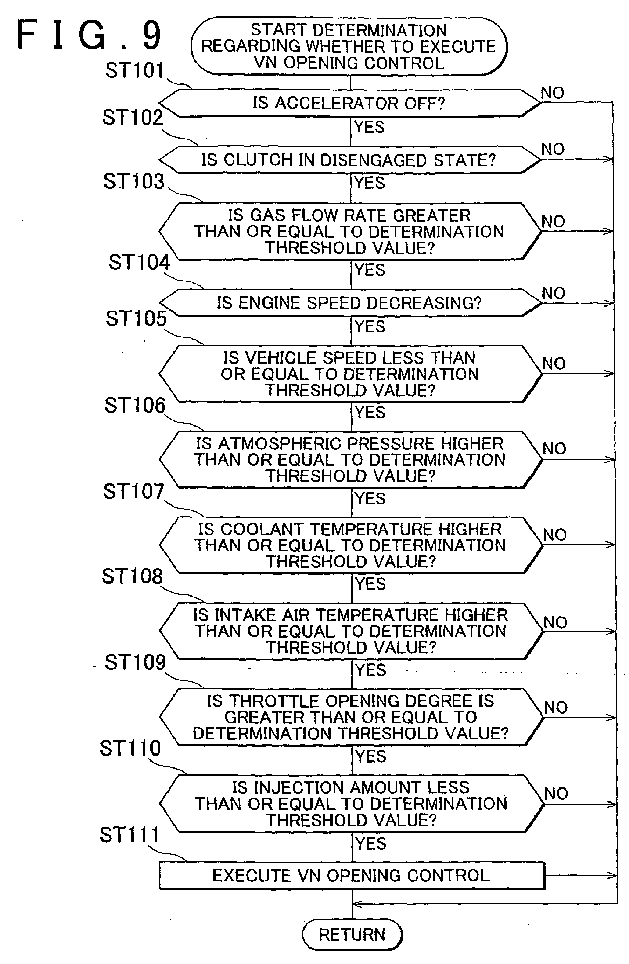

A concrete example of the control (VN opening control) will be described with reference to a flowchart shown in FIG. 9. A control routine shown in FIG. 9 is repeatedly executed by the ECU 200 at every predetermined time (e.g., several milliseconds).

Firstly in step ST101, the ECU 200 determines whether the accelerator is off on the basis of the output signal of the accelerator operation amount sensor 27. If this results in a negative determination (NO), the routine returns. If an affirmative determination is made (YES) in step ST101 (if deceleration is occurring), the process proceeds to step ST102.

In step ST102, it is determined whether the clutch device 300 is in a disengaged clutch state on the basis of the output signal of the clutch sensor 30. If this results in a negative determination (NO), the routine returns and the VN opening control is not executed. If an affirmative determination is made (YES) in step ST102 (if the clutch is in the disengaged state), the process proceeds to step ST103.

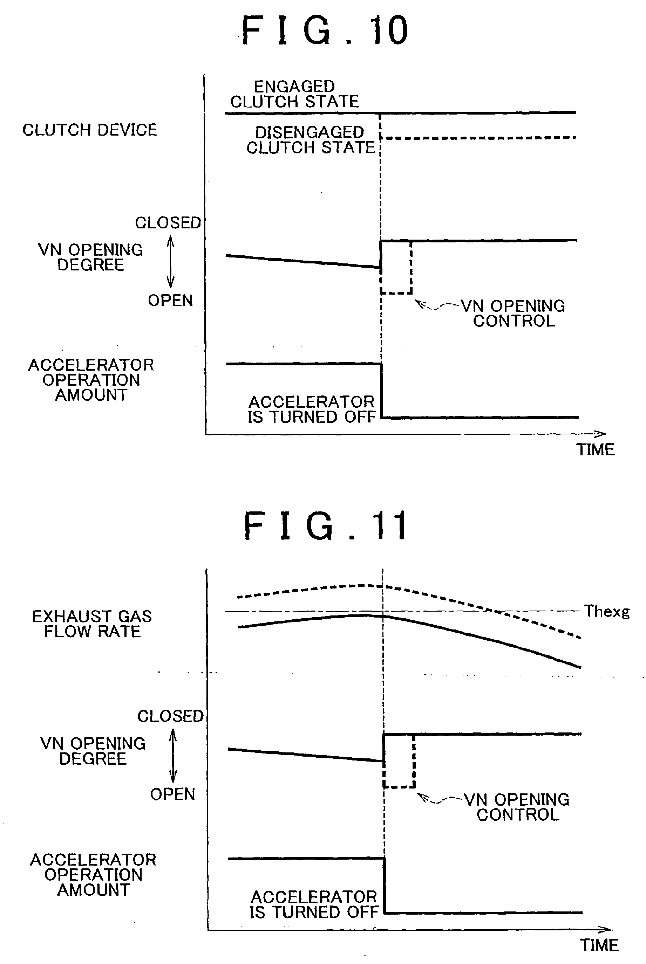

In step ST103, it is determined whether the flow rate of exhaust gas flowing to the turbine wheel 101 (the nozzle vanes 121) of the turbocharger 100 is greater than or equal to a predetermined determination threshold value Thexg (see FIG. 11). If this results in a negative determination (NO), the routine returns and the VN opening control is not executed. If an affirmative determination is made (YES) in step ST103 (if the gas flow rate≥Thexg), the process proceeds to step ST104.

It is to be noted herein that the aforementioned flow rate of exhaust gas flowing to the nozzle vanes 121 is estimated through the use of an estimation map adapted beforehand by experiments, simulations, etc., on the basis of the supercharge pressure (amount of air), the intake air temperature, the amount of fuel injection (amount of combustion gas), the throttle opening degree, the EGR valve opening degree, etc. Among the parameters used to estimate the flow rate of the gas, the supercharge pressure and the intake air temperature are calculated from the output signal of the intake manifold pressure sensor (supercharge pressure sensor) 28 and the output signal of the intake air temperature sensor 23, respectively. Besides, the amount of fuel injection, the throttle opening degree and the EGR valve opening degree are obtained from command values (required values). Instead of the foregoing estimation method, an exhaust gas flow rate sensor that detects the flow rate of exhaust gas may be provided in the exhaust passage 12, and the flow rate of exhaust gas flowing to the nozzle vanes 121 may be obtained from the output of the sensor.

In step ST104, it is determined whether the engine rotation speed is decreasing, on the basis of the output signal of the engine rotation speed sensor 25. Concretely, it is determined that the engine rotation speed is not decreasing, if the amount of change dNe/dt (gradient) of the engine rotation speed is greater than or equal to "0". In this case (the case where a negative determination is made (NO) in step ST104), the routine returns and the VN opening control is not executed. On the other hand, if the amount of change dNe/dt (gradient) of the engine rotation speed is smaller than "0", it is determined that the engine rotation speed is decreasing (affirmative determination in step ST104), and then process proceeds to step ST105.

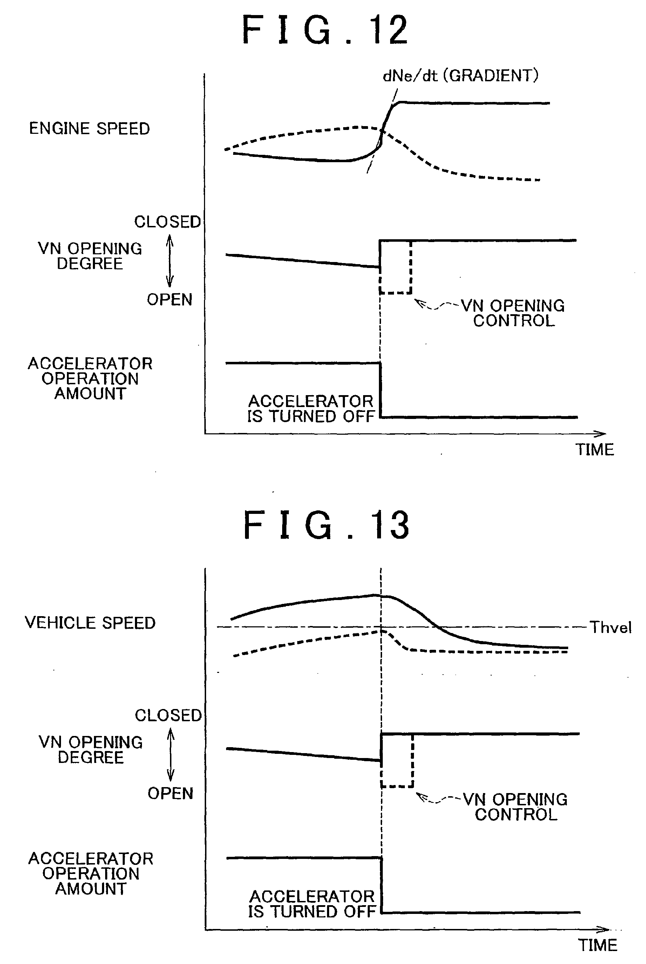

In step ST105, it is determined whether the vehicle speed acquired from the output signal of the vehicle speed sensor 29 is less than or equal to a predetermined determination threshold value Thvel (see FIG. 13). If this results in a negative determination (NO), the routine returns and the VN opening control is not executed. If an affirmative determination is made (YES) in step ST105 (if the vehicle speed≤Thvel), the process proceeds to step ST106.

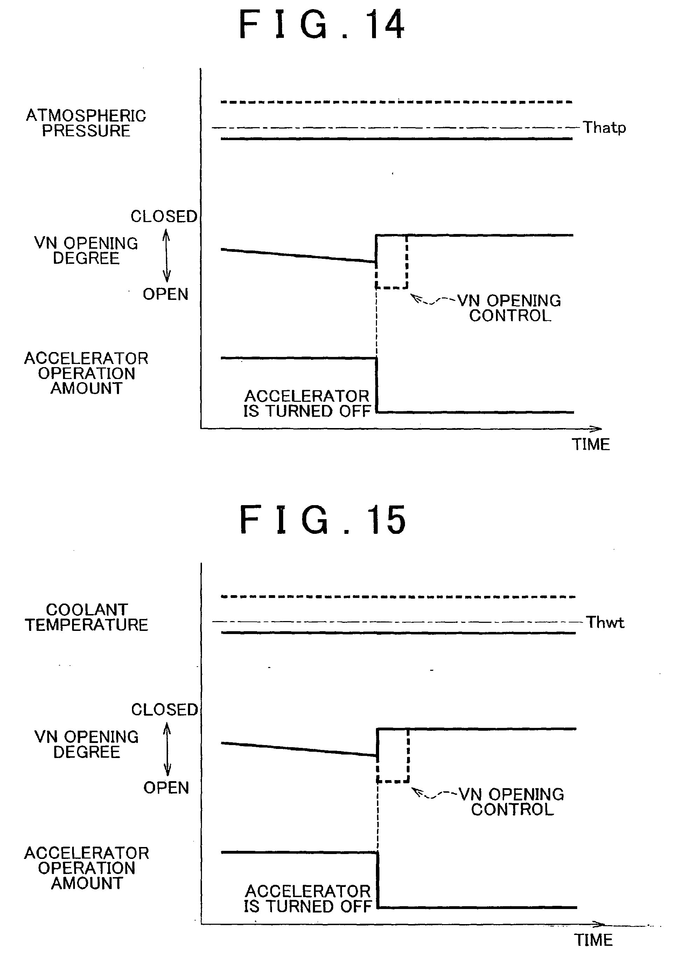

In step ST106, it is determined whether the atmospheric pressure (detected value) acquired from the output signal of the atmospheric pressure sensor 31 is greater than or equal to a predetermined determination threshold value Thatp (see FIG. 14). If this results in a negative determination (NO), the routine returns and the VN opening control is not executed. If an affirmative determination is made (YES) in step ST106 (the atmospheric pressure≥Thatp), the process proceeds to step ST107.

In step ST107, it is determined whether the coolant temperature of the engine 1 acquired from the output signal of the coolant temperature sensor 21 is greater than or equal to a predetermined determination threshold value Thwt. If this results in a negative determination (NO), the routine returns and the VN opening control is not executed. If an affirmative determination is made (YES) in step ST107 (if the coolant temperature≥Thwt), the process proceeds to step ST108.

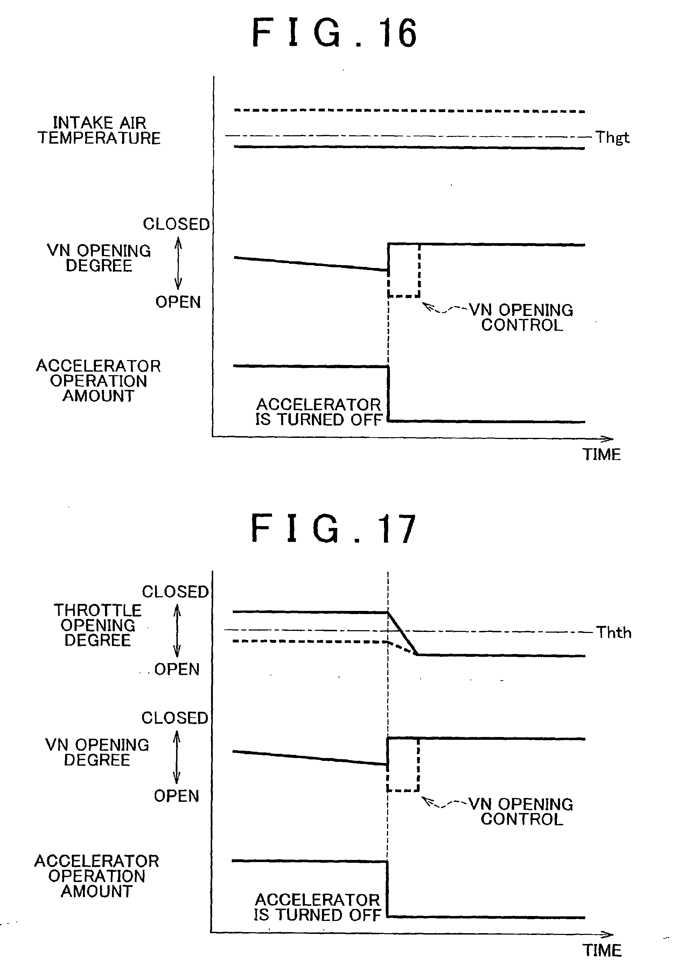

In step ST108, it is determined whether the intake air temperature acquired from the output signal of the intake air temperature sensor 23 is greater than or equal to a predetermined determination threshold value Thgt (see FIG. 16). If this results in a negative determination (NO), the routine returns and the VN opening control is not executed. If an affirmative determination is made (YES) in step ST108 (if the intake air temperature≥Thgt), the process proceeds to step ST109.

In step ST109, it is determined whether the throttle opening degree acquired from the output signal of the throttle opening degree sensor 26 is greater than or equal to (on the open side of) a predetermined determination threshold value Thth. If this results in a negative determination (NO), the routine returns and the VN opening control is not executed. If an affirmative determination is made (YES) in step ST109 (if the throttle opening degree≥Thth), the process proceeds to step ST110.

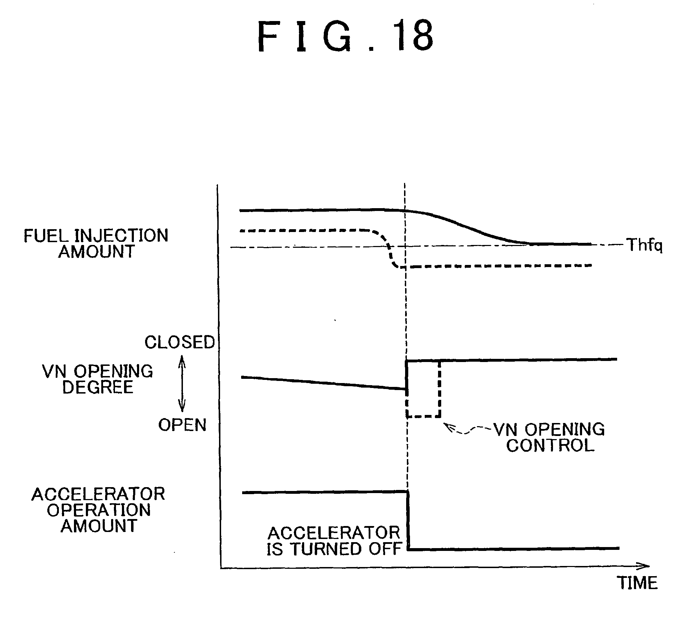

In step ST110, it is determined whether the amount of fuel injection (calculated from a command value (required value)) is less than or equal to a predetermined determination threshold value Thfq (see FIG. 18). If this results in a negative determination (NO), the routine returns and the VN opening control is not executed. If an affirmative determination is made (YES) in step ST110 (if the amount of fuel injection≤Thfq), that is, if an affirmative determination has been made in each of the steps 101 to ST110 (if all the conditions are fulfilled), the ECU 200 executes the VN opening control (step ST111).

It is to be noted herein that the VN opening control executed in step ST111 is a control in which the VN opening degree is set, for a given time, to the open side of the value of VN opening degree (a required value of the VN opening degree in an ordinary VN control) at the time point when the accelerator is turned off (see FIGS. 10 to 18). In other words, the VN opening control is a control in which the VN opening degree value is set, for a given time, at a value that is larger than the VN opening degree value (a required value of the VN opening degree in the ordinary VN control) at the time-point when the accelerator is turned off. The VN opening degree in the VN opening control is set such that unusual noise due to the pressure pulsation does not occur during deceleration, through experiments, simulations, etc. The period in which the VN opening control is executed (i.e., the aforementioned "given time") is set through experiments, simulations, etc., taking into account the period during which unusual noise is produced during deceleration. The VN opening degree during the VN opening control may be set to a maximum opening degree.

The aforementioned "ordinary VN control" is, for example, a control in which the VN opening degree of the variable nozzle vane mechanism 120 is adjusted on the basis of the present operation state of the engine 1 (the turbocharger 100) with reference to a map that has factored in the fuel economy (fuel consumption rate), the emission, the turbo efficiency (supercharge efficiency), etc. (a required opening degree map for the ordinary control).

Next, the processing content of the above-described steps ST102 to ST110 in the flowchart shown in FIG. 9 will be concretely described.

In the flowchart shown in FIG. 9, steps ST102 to ST104 are steps for determining whether the condition for occurrence of unusual noise during deceleration has been fulfilled. The processing content of each of the steps will be described below.

(DETERMINATION PROCESS OF STEP ST102) Firstly, during the deceleration in the disengaged clutch state, the rate at which the engine rotation speed drops is great, and pressure pulsation with a specific frequency occurs, and the pressure pulsation with the specific frequency resonates within the exhaust pipe 12a, producing unusual noise. On the other hand, during the deceleration in the engaged clutch state, the rate at which the engine rotation speed drops is small, and the frequency of pressure pulsation is different from the frequency of pressure pulsation that occurs during the disengaged clutch state (the resonance frequency deviates), so that resonance does not occur in the exhaust pipe 12a, and no unusual noise does not occur. Taking this point into consideration, as shown in FIG. 10, when the clutch device 300 is in the engaged clutch state during declaration (during the off state of the accelerator), the VN opening control is not executed (a solid line in FIG. 10, and negative determination in step ST102). On the other hand, when the clutch device 300 is in the disengaged clutch state during deceleration, it is determined that one of the conditions for executing the VN opening control has been fulfilled (affirmative determination in step ST102).

In the case where the VN opening control is not executed during deceleration, for example, the variable nozzle vane mechanism 120 is closed (in other words, the VN opening degree is set to the minimum opening degree) at the time point when the accelerator is turned off as shown in FIGS. 10 to 18, so that the supercharge pressure of the turbocharger 100 does not sharply drop (see the solid line in FIG. 19). Thus, the deterioration of the combustion state of the engine 1 is restrained, and reacceleration performance from the decelerated state is improved.

(DETERMINATION PROCESS OF STEP ST103) The production of unusual noise during deceleration results from pressure changes occurring in the vicinity of the turbocharger 100 (turbine housing 111) due to the closure of the variable nozzle vane mechanism 120. Therefore, in the case where the rate of gas that passes between the nozzle vanes 121 is small, unusual noise is not produced. Taking this point into consideration, the determination threshold value Thexg is set for the flow rate of exhaust gas that moves to the nozzle vanes 121 as shown in FIG. 11. In the case where the flow rate of the gas at the time point when the accelerator is turned off is smaller than the determination threshold value Thexg (e.g., the case of a solid line in FIG. 11), execution of the VN opening control is not executed (a solid line in FIG 11, and negative determination in step ST103). On the other hand, in the case where the flow rate of the gas at the time point when the accelerator is turned off is greater than or equal to the predetermined determination threshold value Thexg (e.g., the case of an interrupted line in FIG. 11), it is determined that one of the conditions for executing the VN opening control has been fulfilled (affirmative determination in step ST103).

Herein, as for the determination threshold value Thexg used in the determination process of step ST103, an upper limit value of the flow rate of gas, below which unusual noise due to the pressure pulsation does not occur, is acquired beforehand through experiments, simulations, etc., using the flow rate of gas that passes between the nozzle vanes 121 as a parameter. Then, a value obtained by adjusting the acquired upper limit value (e.g., (the upper limit value of the flow rate of gas)-(margin)) is set as the determination threshold value Thexg.

(DETERMINATION PROCESS OF STEP ST104) Considering that even during deceleration, unusual noise due to pressure pulsation does not occur in the case where the engine rotation speed is increasing (an example of the case is the case where the engine rotation speed increases when the clutch is engaged during a downshift), it is determined whether to execute the VN opening control on the basis of whether the engine rotation speed is decreasing. Concretely, for example, in the case where the amount of change dNe/dt (gradient) of the engine rotation speed is greater than or equal to "0" (the case where the engine rotation speed is not decreasing) as shown in FIG. 12, the VN opening control is not executed (a solid line in FIG 12, and negative determination in step ST104). On the other hand, in the case where the amount of change dNe/dt (gradient) of the engine rotation speed is smaller than "0" (the case where the engine rotation speed is decreasing), it is determined that one of the conditions for executing the VN opening control has been fulfilled (affirmative determination in step ST104).

(DETERMINATION PROCESS OF STEP ST105) Step ST105 in the flowchart shown in FIG. 9 is a step for determining whether the unusual noise resulting from the pressure pulsation is disturbing.

In step ST105, considering that under a condition that the vehicle speed is fast, background noise may be so great that unusual noise resulting from pressure pulsation is not disturbing, a predetermined determination threshold value Thvel for the vehicle speed is set as shown in FIG. 13. In the case where the vehicle speed is greater than the determination threshold value Thvel (e.g., the case of a solid line in FIG. 13), the VN opening control is not executed (the solid line in FIG 13, and negative determination in step ST105). On the other hand, in the case where the vehicle speed is less than or equal to the determination threshold value Thvel (e.g., the case of an interrupted line in FIG. 13), it is determined that one of the conditions for executing the VN opening control has been fulfilled (affirmative determination in step ST105).

As for the determination threshold value Thvel used in the determination process of step ST105, a lower limit value of the vehicle speed, above which the unusual noise resulting from the pressure pulsation is not disturbing, is acquired beforehand through experiments and the like using the vehicle speed as a parameter, and a value obtained by adjusting the acquired value (the lower limit value of the vehicle speed) (e.g. (the lower limit value of the vehicle speed)+(margin)) is set as the determination threshold value Thvel.

Next, in the flowchart shown in FIG. 9, steps ST106 to ST111 will be described. Steps ST106 to ST111 are steps for determining whether a problem such as deterioration of combustion is to arise, if the VN opening control is performed. The processing content of each step will be described.

(DETERMINATION PROCESS OF STEP ST106) In this step, taking into account that if the ambient environment is under low pressure, the amount of air (amount of oxygen) is small and smoke is likely to be produced, it is determined that restraint of the production of smoke is to be given priority on the basis of the atmospheric pressure detected by the atmospheric pressure sensor 31. Concretely, as shown in FIG. 14, the determination threshold value Thatp for the atmospheric pressure (detected value) is set, and if the atmospheric pressure is lower than the determination threshold value Thatp (e.g., the case of a solid line in FIG. 14), the VN opening control is not executed (the solid line FIG. 14, and negative determination in step ST106). That is, in the case where the atmospheric pressure is low, the restraint of production of smoke is given priority. On the other hand, in the case where the atmospheric pressure is greater than or equal to the determination threshold value Thatp (e.g., the case of an interrupted line in FIG. 14), it is determined that one of the conditions for executing the VN opening control has been fulfilled (affirmative determination in step ST106).

As for the determination threshold value Thatp used in the determination process of step ST106, an external air pressure (atmospheric pressure), at or above which smoke is not produced even in the case where the VN opening control is performed during deceleration, is acquired beforehand through experiments, simulations, etc., and a value obtained by adjusting the acquired value is set as the determination threshold value Thatp.

(DETERMINATION PROCESS OF STEP ST107) In this step, taking into account that if the coolant temperature of the engine 1 is low, the ignition performance of the fuel injected into the combustion chambers 1d deteriorates so that misfire is likely to occur, it is determined whether misfire resistance is to be given priority on the basis of the coolant temperature of the engine 1 detected by the coolant temperature sensor 21. Concretely, as shown in FIG. 15, the determination threshold value Thwt is set for the coolant temperature (detected value), and in the case where the coolant temperature is lower than the determination threshold value Thwt (e.g., the case of a solid line in FIG. 15), the VN opening control is not executed (the solid line in FIG. 15, and negative determination in step ST107). That is, in the case where the coolant temperature of the engine 1 is low, misfire resistance is given priority. On the other hand, in the case where the coolant temperature is higher than or equal to the determination threshold value Thwh (e.g., the case of an interrupted line in FIG. 15), it is determined that one of the conditions for executing the VN opening control has been fulfilled (affirmative determination in step ST107).

As for the determination threshold value Thwt used in the determination process of step ST107, for example, a coolant temperature, at or above which misfire does not occur even if the VN opening control is carried out during deceleration, is acquired beforehand through experiments, simulations, etc., and a value obtained by adjusting the acquired value is set as the determination threshold value Thwt.

(DETERMINATION PROCESS OF STEP ST108) In this step, taking into account that if the intake air temperature of the engine 1 is low, the ignition performance in the combustion chamber 1d deteriorates so that misfires is likely to occur, it is determined whether misfire resistance is given priority on the basis of the intake air temperature detected by the intake air temperature sensor 23. Concretely, as shown in FIG. 16, the determination threshold value Thgt is set for the intake air temperature (detected value), and in the case where the intake air temperature is lower than the determination threshold value Thgt (e.g., the case of a solid line in FIG. 16), the VN opening control is not executed (the solid line in FIG 16, and negative determination in step ST108). That is, if the intake air temperature is low, misfire resistance is given priority. On the other hand, in the case where the intake air temperature is higher than or equal to the determination threshold value Thgt (e.g., the case of an interrupted line in FIG 16), it is determined that one of the conditions for executing the VN opening control has been fulfilled (affirmative determination in step ST108).

As for the determination threshold value Thgt used in the determination process of step ST108, for example, an intake air temperature, at or above which misfire does not occur even in the case where the VN opening control is performed during deceleration, is acquired beforehand through experiments, simulations, etc., and a value obtained by adjusting the acquired value is set as the determination threshold value Thgt.

(DETERMINATION PROCESS OF STEP ST109) In this step, taking into account that in a situation where the throttle valve 6 is in a constricted state, the supercharge pressure of the turbocharger 100 is particularly low so that misfire is likely to occur, the determination threshold value Thth is set for the throttle opening degree detected by the throttle opening degree sensor 26, as shown in FIG. 17. In the case where the throttle opening degree at the time point when the accelerator is turned off is smaller than (on the closed side of) the determination threshold value Thth (e.g., the case of a solid line in FIG. 17), the VN opening control is not executed (the solid line in FIG. 17, and negative determination in step ST109). That is, if the throttle opening degree is small, misfire resistance is given priority. On the other hand, in the case where the throttle opening degree at the time point when the accelerator is turned off is greater than or equal to (on the open side of) the determination threshold value Thth (e.g., the case of an interrupted line in FIG. 17), it is determined that one of the conditions for executing the VN opening control has been fulfilled (affirmative determination in step ST 109).

As for the determination threshold value Thth used in the determination process of step ST109, for example, a throttle opening degree, at or above which misfires does not occur even if the VN opening control is carried out during deceleration, is acquired beforehand through experiments, simulations, etc., and a value obtained by adjusting the acquired value is set as the determination threshold value Thth.

(DETERMINATION PROCESS OF STEP ST110) In this step, taking into account that if the supercharge pressure of the turbocharger 100 decreases when the fuel injection is being performed during deceleration (i.e., while the accelerator is off), for example, misfire may occur due to deterioration of the ignition performance in the combustion chambers 1d, and smoke may increase due to decrease in the amount of air (amount of oxygen), the determination threshold value Thfq is set for the amount of fuel injection (calculated from a command value) as shown in FIG. 18. In the case where the amount of fuel injection at the time point when the accelerator is turned off is larger than the determination threshold value Thfq (e.g., the case of a solid line in FIG. 18), the VN opening control is not executed (the solid line in FIG. 18, and negative determination in step ST110). That is, in the case where the amount of fuel injection is large, misfire resistance and restraint of production of smoke are given priority. On the other hand, in the case where the amount of fuel injection at the time point when the accelerator is turned off is less than or equal to the determination threshold value Thfq (e.g., the case of an interrupted line in FIG. 18), it is determined that one of the conditions for executing the VN opening control has been fulfilled (affirmative determination in step ST110).

As for the determination threshold value Thfq used in the determination process of step ST110, for example, an amount of fuel injection, at or below which neither misfire nor smoke occurs even in the case where the VN opening control is carried out during deceleration, is acquired beforehand through experiments, simulations, etc., and a value obtained by adjusting the acquired value is set as the determination threshold value Thfq.

As for the amount of fuel injection during deceleration, a control of gradually reducing the amount of fuel injection (deceleration smoothing control) is performed as shown in FIG. 18, in order to restrain deceleration shock, for example, immediately after the accelerator is turned off.

Then, only in the case where all the conditions in steps ST102 to ST110 are fulfilled (the case where an affirmative determination has been made in each of the steps) during deceleration, the VN opening control is executed (step ST111).

As described above, according to the control of this embodiment, instead of always executing the VN opening control at the time of deceleration, the VN opening control is allowed to be executed only in the case where the condition for occurrence of unusual noise during declaration has been fulfilled (the case where "the condition that the clutch device is in the disengaged clutch state", "the condition that the flow rate of the gas flowing to the turbocharger is greater than or equal to the predetermined determination threshold value", and "the condition that the engine rotation speed is decreasing" are all fulfilled). Due to this control, the frequency of execution of the VN opening control can be minimized, and therefore the problems resulting from the VN opening control, that is, the deterioration of combustion and the deterioration of reacceleration performance, can also be minimized.

Besides, even in the case where the condition for occurrence of unusual noise has been fulfilled, the VN opening control is not executed if there is a possibility that the combustion state of the engine 1 may be deteriorated by executing the VN opening control (i.e., if any one of "the condition that the atmospheric pressure is higher than or equal to the predetermined determination threshold value", "the condition that the engine coolant temperature is higher than or equal to the predetermined determination threshold value", "the condition that the intake air temperature is higher than or equal to the predetermined determination threshold value", "the condition that the throttle opening degree is greater than or equal to the predetermined determination threshold value" and "the condition that the amount of fuel injection is less than or equal to the predetermined determination threshold value" is unfulfilled). Therefore, the emission deterioration, the increased smoke and the occurrence of misfire can be more effectively restrained.

(OTHER EMBODIMENTS) In the foregoing embodiments, the invention is applied to a turbocharger that is installed for a common-rail in-cylinder direct injection multi-cylinder (four-cylinder) diesel engine. However, the invention is not limited to this application, but is also applicable to the control of a turbocharger installed for a diesel engine that has an arbitrary number of cylinders, for example, a six-cylinder diesel engine.

Although the foregoing embodiments have described in conjunction with the control of a variable nozzle vane turbocharger installed for a diesel engine, the invention is not limited to this control, but is also applicable to the control of a variable nozzle vane turbocharger installed for a gasoline engine.

Although in the foregoing embodiments, the invention is applied to the control of a turbocharger mounted in a vehicle that includes an engine, a clutch device (manual clutch), a manual transmission, etc., the invention is not limited to this application, but is also applicable to a turbocharger that is to be mounted in a vehicle that includes an engine, an automatic clutch device, an automatized manual transmission, etc.

In the invention, the actuator that drives the variable nozzle vane mechanism may be, for example, a negative pressure actuator or a hydraulic actuator, as well as a motor actuator whose drive source is an electric motor.

The invention can be used for the control of a turbocharger including a variable nozzle vane mechanism. More particularly, the invention can be effectively used for the control of restraining unusual noise that results from pressure pulsation that occurs at rear ends of nozzle vanes during deceleration.

## Claims

1. A control device for a turbocharger (100) that includes a compressor provided in an intake passage of an engine mounted in a vehicle; a turbine wheel provided in an exhaust passage of the engine; and a variable nozzle vane mechanism (120) that includes a plurality of nozzle vanes provided on an outer peripheral side of the turbine wheel and that adjusts a flow of exhaust gas by changing an opening degree of the nozzle vanes, the control device **characterized by** comprising
nozzle vane opening degree control means for executing a nozzle vane opening control that controls the opening degree of the nozzle vanes of the nozzle vane mechanism (120) to an open side in order to prevent occurrence of unusual noise, wherein the nozzle vane opening degree control means executes the nozzle vane opening control in response to a determination that all of the following conditions are fulfilled:
an accelerator is off,
a clutch device provided between the engine and a drive system is in a disengaged clutch state,
a flow rate of the gas flowing to the turbocharger (100) is greater than or equal to a predetermined determination threshold value,
an engine rotation speed is decreasing,
a vehicle speed is less than or equal to a predetermined determination threshold value,
an atmospheric pressure is greater than or equal to a predetermined determination threshold value,
an engine coolant temperature is greater than or equal to a predetermined determination threshold value,
an intake air temperature is greater than or equal to a predetermined determination threshold value,
a throttle opening degree is greater than or equal to a predetermined determination threshold value, and
an amount of fuel injection is less than or equal to a predetermined determination threshold value.

2. A control method for a turbocharger (100) that includes a compressor provided in an intake passage of an engine mounted in a vehicle; a turbine wheel provided in an exhaust passage of the engine; and a variable nozzle vane mechanism (120) that includes a plurality of nozzle vanes provided on an outer peripheral side of the turbine wheel and that adjusts a flow of exhaust gas by changing an opening degree of the nozzle vanes, the method **characterized by** comprising the steps of:
determining whether a first condition that an accelerator is off,
a second condition that a clutch device provided between the engine and a drive system is in a disengaged clutch state,
a third condition that a flow rate of the gas flowing to the turbocharger (100) is greater than or equal to a predetermined determination threshold value,
a fourth condition that an engine rotation speed is decreasing,
a fifth condition that a vehicle speed is less than or equal to a predetermined determination threshold value,
a sixth condition that an atmospheric pressure is greater than or equal to a predetermined determination threshold value,
a seventh condition that an engine coolant temperature is greater than or equal to a predetermined determination threshold value,
an eighth condition that an intake air temperature is greater than or equal to a predetermined determination threshold value,
a ninth condition that a throttle opening degree is greater than or equal to a predetermined determination threshold value, and
a tenth condition that an amount of fuel injection is less than or equal to a predetermined determination threshold value are all fulfilled; and
executing a nozzle vane opening control that controls the opening degree of the nozzle vanes of the nozzle vane mechanism (120) to an open side in order to prevent occurrence of unusual noise in response to determining that all of the first condition to the tenth condition are fulfilled.

## Patentansprüche

1. Steuervorrichtung für einen Turbolader (100), der einen Kompressor, der in einem Einlassdurchgang einer Maschine vorgesehen ist, die in einem Fahrzeug montiert ist; ein Turbinenrad, das in einem Abgasdurchgang der Maschine vorgesehen ist; und einen variablen Düsenschaufelmechanismus (120) aufweist, der eine Vielzahl von Düsenschaufeln aufweist, die an einer Außenumfangsseite des Turbinenrads vorgesehen sind, und der eine Strömung von Abgas durch ein Ändern eines Öffnungsgrads der Düsenschaufeln einstellt, wobei die Steuervorrichtung **gekennzeichnet ist durch**
eine Düsenschaufelöffnungsgradsteuereinrichtung zum Ausführen einer Düsenschaufelöffnungssteuerung, die den Öffnungsgrad der Düsenschaufeln des Düsenschaufelmechanismus (120) zu einer offenen Seite hin steuert, um ein Auftreten eines unüblichen Geräuschs zu verhindern, wobei der Düsenschaufelöffnungsgradsteuermechanismus die Düsenschaufelöffnungssteuerung in Erwiderung auf eine Bestimmung hin ausführt, dass alle von den folgenden Bedingungen erfüllt sind:
ein Beschleuniger ist aus,
eine Kupplungsvorrichtung, die zwischen der Maschine und einem Antriebssystem vorgesehen ist, ist in einem ausgerückten Kupplungszustand,
eine Strömungsrate des Gases, das in dem Turbolader (100) strömt, ist größer als oder gleich wie ein vorbestimmter Bestimmungsschwellenwert,
eine Maschinendrehzahl sich verringert,
eine Fahrzeuggeschwindigkeit geringer als oder gleich wie ein vorbestimmter Bestimmungsschwellenwert ist,
ein Atmosphärendruck größer als oder gleich wie ein vorbestimmter Bestimmungsschwellenwert ist,
eine Maschinenkühlmitteltemperatur größer als oder gleich wie ein vorbestimmter Bestimmungsschwellenwert ist,
eine Einlasslufttemperatur größer als oder gleich wie ein vorbestimmter Bestimmungsschwellenwert ist,
ein Drosselöffnungsgrad größer als oder gleich wie ein vorbestimmter Bestimmungsschwellenwert ist, und
eine Menge einer Kraftstoffeinspritzung geringer als oder gleich wie ein vorbestimmter Bestimmungsschwellenwert ist.

2. Steuerverfahren für einen Turbolader (100), der einen Kompressor, der in einem Einlassdurchgang einer Maschine vorgesehen ist, die in einem Fahrzeug montiert ist; ein Turbinenrad, das in einem Abgasdurchgang der Maschine vorgesehen ist, und einen variablen Düsenschaufel-mechanismus (120) aufweist, der eine Vielzahl von Düsenschaufeln aufweist, die an einer Außenumfangsseite des Turbinenrads vorgesehen sind, und der eine Strömung von Abgas durch ein Ändern eines Öffnungsgrads der Düsenschaufel einstellt, wobei das Verfahren durch die folgenden Schritte gekennzeichnet ist:
Bestimmen, ob eine erste Bedingung, dass ein Beschleuniger aus ist,
eine zweite Bedingung, dass eine Kupplungsvorrichtung, die zwischen der Maschine und einem Antriebssystem vorgesehen ist, in einem ausgerückten Kupplungszustand ist,
eine dritte Bedingung, dass eine Strömungsrate des Abgases, das zu dem Turbolader (100) strömt, größer als oder gleich wie ein vorbestimmter Bestimmungsschwellenwert ist,
eine vierte Bedingung, dass sich eine Maschinendrehzahl verringert,
eine fünfte Bedingung, dass eine Fahrzeuggeschwindigkeit geringer als oder gleich wie ein vorbestimmter Bestimmungsschwellenwert ist,
eine sechste Bedingung, dass ein Atmosphärendruck größer als oder gleich wie ein vorbestimmter Bestimmungsschwellenwert ist,
eine siebte Bedingung, dass eine Maschinenkühlmitteltemperatur größer als oder gleich wie ein vorbestimmter Bestimmungsschwellenwert ist,
eine achte Bedingung, dass eine Einlasslufttemperatur größer als oder gleich wie ein vorbestimmter Bestimmungsschwellenwert ist,
eine neunte Bedingung, dass ein Drosselöffnungsgrad größer als oder gleich wie ein vorbestimmter Bestimmungsschwellenwert ist, und
eine zehnte Bedingung, dass eine Menge einer Kraftstoffeinspritzung geringer als oder gleich wie ein vorbestimmter Bestimmungsschwellenwert ist, alle erfüllt sind; und
Ausführen einer Düsenschaufelöffnungssteuerung, die den Öffnungsgrad der Düsenschaufel des Düsenschaufelmechanismus (120) zu einer offenen Seite hin steuert, um ein Auftreten eines unüblichen Geräuschs zu verhindern, in Erwiderung auf ein Bestimmen, dass alle von der ersten Bedingung zu der zehnten Bedingung erfüllt sind.

## Revendications

1. Dispositif de commande pour un turbocompresseur (100) qui comprend un compresseur prévu dans un passage d'admission d'un moteur monté dans un véhicule ; une roue de turbine prévue dans un passage d'échappement du moteur ; et un mécanisme à aubes de distributeur variables (120) qui comprend une pluralité d'aubes de distributeur prévues sur un côté périphérique extérieur de la roue de turbine et qui ajuste un écoulement du gaz d'échappement en modifiant un degré d'ouverture des aubes de distributeur, le dispositif de commande étant **caractérisé en ce qu'**il comprend :
des moyens de commande de degré d'ouverture d'aubes de distributeur pour exécuter une commande d'ouverture d'aubes de distributeur qui commande le degré d'ouverture des aubes de distributeur du mécanisme à aubes de distributeur (120) vers un côté d'ouverture afin d'éviter l'apparition d'un bruit inhabituel, dans lequel les moyens de commande de degré d'ouverture d'aubes de distributeur exécutent la commande d'ouverture d'aubes de distributeur en réponse à une détermination que toutes les conditions suivantes sont satisfaites :
un accélérateur est désactivé,
un dispositif d'embrayage prévu entre le moteur et un système d'entraînement est dans un état d'embrayage désengagé,
un débit du gaz s'écoulant vers le turbocompresseur (100) est supérieur ou égal à une valeur de seuil de détermination prédéterminée,
une vitesse de rotation de moteur diminue,
une vitesse de véhicule est inférieure ou égale à une valeur de seuil de détermination prédéterminée,
une pression atmosphérique est supérieure ou égale à une valeur de seuil de détermination prédéterminée,
une température de liquide de refroidissement de moteur est supérieure ou égale à une valeur de seuil de détermination prédéterminée,
une température d'air d'admission est supérieure ou égale à une valeur de seuil de détermination prédéterminée,
un degré d'ouverture de papillon est supérieur ou égal à une valeur de seuil de détermination prédéterminée, et
une quantité d'injection de carburant est inférieure ou égale à une valeur de seuil de détermination prédéterminée.

2. Procédé de commande pour un turbocompresseur (100) qui comprend un compresseur prévu dans un passage d'admission d'un moteur monté dans un véhicule ; une roue de turbine prévue dans un passage d'échappement du moteur ; et un mécanisme à aubes de distributeur variables (120) qui comprend une pluralité d'aubes de distributeur prévues sur un côté périphérique extérieur de la roue de turbine et qui ajuste un écoulement du gaz d'échappement en modifiant un degré d'ouverture des aubes de distributeur, le procédé étant **caractérisé en ce qu'**il comprend les étapes :
de détermination si une première condition qu'un accélérateur est désactivé,
une deuxième condition qu'un dispositif d'embrayage prévu entre le moteur et un système d'entraînement est dans un état d'embrayage désengagé,
une troisième condition qu'un débit du gaz s'écoulant vers le turbocompresseur (100) est supérieur ou égal à une valeur de seuil de détermination prédéterminée,
une quatrième condition qu'une vitesse de rotation de moteur diminue,
une cinquième condition qu'une vitesse de véhicule est inférieure ou égale à une valeur de seuil de détermination prédéterminée,
une sixième condition qu'une pression atmosphérique est supérieure ou égale à une valeur de seuil de détermination prédéterminée,
une septième condition qu'une température de liquide de refroidissement de moteur est supérieure ou égale à une valeur de seuil de détermination prédéterminée,
une huitième condition qu'une température d'air d'admission est supérieure ou égale à une valeur de seuil de détermination prédéterminée,
une neuvième condition qu'un degré d'ouverture de papillon est supérieur ou égal à une valeur de seuil de détermination prédéterminée, et
une dixième condition qu'une quantité d'injection de carburant est inférieure ou égale à une valeur de seuil de détermination prédéterminée sont toutes satisfaites ; et
d'exécution d'une commande d'ouverture d'aubes de distributeur qui commande le degré d'ouverture des aubes de distributeur du mécanisme à aubes de distributeur (120) vers un côté d'ouverture afin d'éviter l'apparition d'un bruit inhabituel en réponse à la détermination que les première à dixième conditions sont toutes satisfaites.
